# EUROPEAN PATENT APPLICATION

(11) **EP 2 312 378 A1**
(43) Date of publication of application: **20.04.2011**
(21) Application number: 10177882.7
(22) Date of filing: 21.09.2010
(51) Int. Cl.: G02F 1/1333, G02F 1/1335

(54) **Visual gap mitigation apparatus for a segmented display panel**

(30) Priority: 05.10.2009 US 573612
(71) Applicant: Delphi Technologies, Inc., Troy, MI 48007 (US)
(72) Inventor: Myers, Bruce A., Kokomo, IN 46901 (US); Lambert, David K., Sterling Heights, MI 48310 (US)
(74) Representative: Denton, Michael John

(57) **Abstract**

A transparent bevel apparatus (20/20') overlays marginal portions of juxtaposed display devices (12, 14) of a segmented display panel (10) to obscure the visual gap (G) between the display devices (12, 14). The bevel apparatus (20/20') at least partially overlaps only marginal pixels of the adjacent display devices (12, 14), so that light from a given display device (12, 14) that passes through the bevel apparatus (20/20') is bent toward the respective display device (12, 14) at an angle with respect to the remainder of the emitted light. Consequently, light emitted from the marginal portions of the juxtaposed display devices (12, 14) is seen by the viewer in the place where the visual gap (G) would otherwise be seen. The bevel apparatus may be constructed in the form of a sheet (20') that overlays an entire display device (12, 14), or all or a portion of the entire display panel (10), or a narrow strip (20) that is aligned with the seams (18) and affixed to juxtaposed faces (22, 24) of the display devices (12, 14).

## Description

### TECHNICAL FIELD

The present invention is directed to segmented display panels where two or more display devices such as liquid crystal displays (LCDs) are arranged in a matrix and activated to create an expansive overall image when the individual display devices are viewed collectively, and more particularly to an optical apparatus for mitigating visual gaps between juxtaposed display devices.

### BACKGROUND OF THE INVENTION

Expansive electronic display panels for automotive or consumer electronic applications may be cost-effectively produced by joining and suitably activating multiple smaller display devices to form a segmented display panel in which each of the display devices forms but a segment of the overall display panel. This technique can be used for anything from small hand-held devices such as cell phones and personal data assistants (PDAs) to large display panels for auditoriums and sport venues. One of the problems inherent in segmented display panels is that the seams between adjacent display devices are readily apparent to a viewer when the display panel is activated because the pixels of any given display device do not extend to its very edges. Thus, a viewer perceives a matrix of dark lines or gaps instead of a smooth, seamless image.

Various techniques have been proposed for mitigating the visual effect of seams between juxtaposed display devices. For example, the published U.S. Patent Application Numbers 2002/0163301 and 2009/0073080 disclose gap-hiding techniques such as filling the seams with a light-absorbing cloth or an optically clear, index-matching, adhesive material. Others have disclosed the use of optical lenses for magnifying all or part of the individual image segments; see, for example, the published U.S. Patent Application Number 2007/0262916 and the U.S. Patent Nos. 5,751,387 and 6,128,054. And others have disclosed optical gratings for shifting adjacent image segments toward the gap or seam between them; see, for example, the published U.S. Patent Application Number 2006/0145942 and the U.S. Patent No. 7,439,938.

Since the above-mentioned techniques tend to be either ineffective or cost-prohibitive, what is needed is a simple, yet effective way of mitigating the visual gap between adjacent display devices of a segmented display panel.

### SUMMARY OF THE INVENTION

The present invention is about an optical apparatus for obscuring a visual gap between juxtaposed light emitting display devices of a segmented display panel. The apparatus comprises one or more transparent optical members in the form of a sheet, or strip, that at least partially overlaps exposed faces of the juxtaposed display devices. The transparent optical members include a bevel lens portion that overlays only peripheral portions of the display devices adjacent a seam separating the display devices. The light emitted from the peripheral portions that passes through said bevel lens portion is bent away from said seam at an angle with respect to light emitted from other portions of said display, and the light emitted from said peripheral portions is seen in place of the visual gap. More precisely, the optical members are in the form of a strip of transparent material symmetrically aligned with the seam and including first and second bevel lens portions oppositely disposed about the seam and overlaying the peripheral portions of the display devices. Furthermore, the optical members include an integral tab of transparent material received in the seam to ensure symmetrical alignment of the optical members with the seam. The optical members are in the form of a sheet of transparent material that individually overlay the display devices or, alternatively, overlay two or more of the display devices.

### BRIEF DESCRIPTION OF THE DRAWINGS

FIG. 1 is a cross-sectional view of two juxtaposed display devices of a segmented display panel.

FIG. 2 is an enlarged cross-sectional view of the juxtaposed display devices of FIG. 1, with a seam-obscuring bevel apparatus according to a first embodiment of the present invention.

FIG. 3 is an enlarged cross-sectional view of the juxtaposed display devices of FIG. 1, with a seam-obscuring bevel apparatus according to a second embodiment of the present invention.

### DESCRIPTION OF THE PREFERRED EMBODIMENT

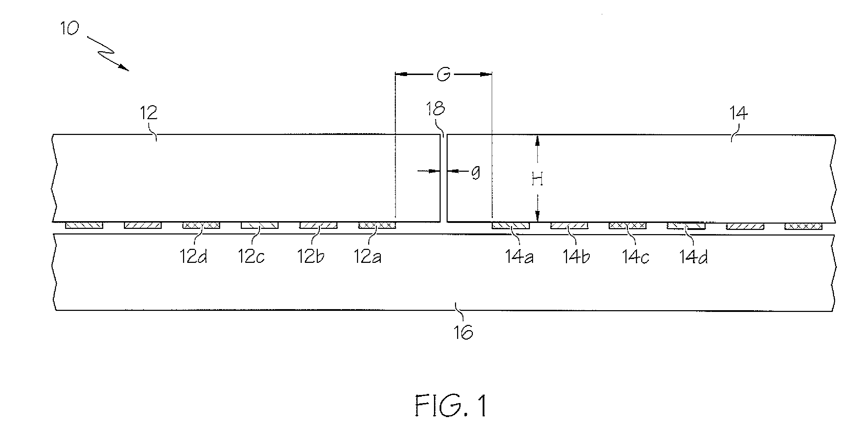

Referring to the drawings, and particularly to FIG. 1, the reference numeral 10 generally designates a portion of a segmented display panel comprising at least two individual display devices 12 and 14 that are arranged in juxtaposition on a common substrate or backplane 16. The reference numerals 12a, 12b, 12c, 12d, etc. represent light-emitting pixels of the display device 12, while the reference numerals 14a, 14b, 14c, 14d, etc. represent light-emitting pixels of the display device 14. Of practical necessity, there is a narrow physical seam 18 of dimension g between the display devices 12 and 14, but the existence of the seam 18 is visually accentuated when the display panel 10 is activated due to the much wider optical gap *G* between the marginal pixels 12a and 14a. To a viewer of the display panel 10, the optical gap *G* has the appearance of a visible dark line superimposed on the displayed image, which renders the display panel unacceptable for many applications.

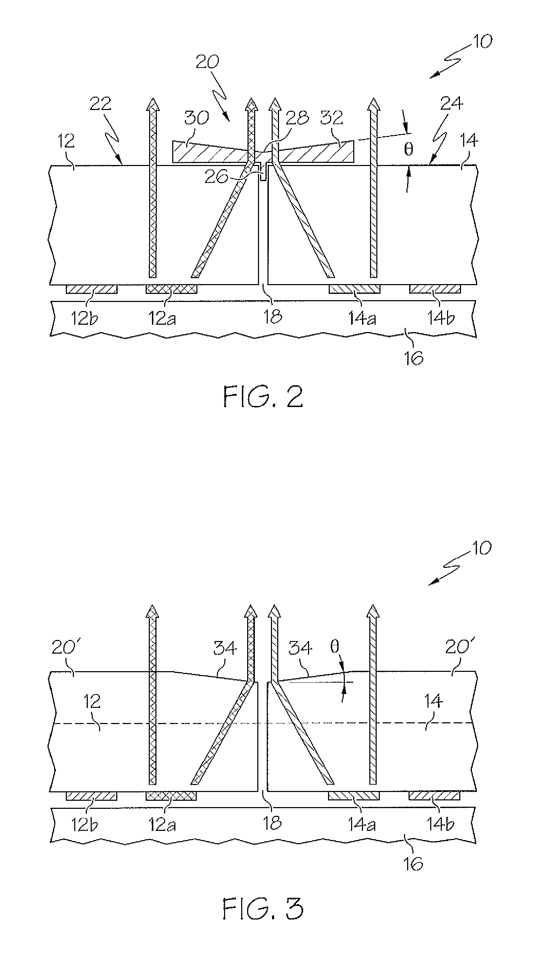

The optical gap *G* is obscured from the display viewer, according to this invention, by a transparent bevel apparatus 20, 20' that overlays the display devices 12 and 14, at least partially overlapping the marginal pixels 12a and 14a, so that light passing through the bevel apparatus 20, 20' is bent to translate a marginal portion of the image from the respective display device 12, 14 toward the seam 18 so as to cover the optical gap *G*. Consequently, the optical gap *G* is invisible to the viewer, and the display panel 10 appears to be seamless. A first embodiment of the bevel apparatus is designated by the reference numeral 20 in FIG. 2, and a second embodiment of the bevel apparatus is designated by the reference numeral 20' in FIG. 3.

Referring to FIG. 2, the bevel apparatus 20 comprises a narrow strip of transparent glass or plastic that is affixed to the exposed faces 22, 24 of display devices 12, 14 with a transparent adhesive, for example. The bevel apparatus 20 is positioned in alignment with the intra-display gap 18, symmetrically overlapping juxtaposed marginal portions of the display devices 12 and 14. The width of the bevel apparatus 20 is such that it overlaps at least a portion of the marginal pixels 12a and 14a. The optimum wedge angle θ may either be determined empirically so that marginal pixels seen through the bevel apparatus 20 appear to fill in the entire gap *G*, or it may be calculated as explained below. The bevel apparatus 20 can extend over one or several rows of the marginal pixels. An integral alignment feature in the form of a central inwardly depending tab 26 extends into the gap 18 between display devices 12 and 14 to ensure symmetrical alignment of the bevel apparatus 20 with the gap 18.

To calculate the optimum wedge angle θ, the first step is to determine angle θ*_1* between the normal to surface 24 and the direction of a ray that passes from pixel 14a to a point on surface 24 in the vicinity of alignment tab 26, after it exits the solid material to the air. For example, if the thickness of 24 is *H*, gap *G* = *H*, and the optical path in display device 14 is through a transparent material with index of refraction *n_S =* 1.5, then θ_1 = *ASIN(n_S*SIN(0.5))* = 0.80256 rad = 45.983°. The second step is to determine the angle θ*_2* between the normal to surface 24 and the direction of the aforementioned ray after it passes into bevel apparatus 20. To be specific, if bevel apparatus is composed of a transparent material with index of refraction n_B*,* then θ*_2* = *ASIN((1*/*n_B) *SIN(θ_1)).* For example, if θ*_1* = 45.983° as in the previous example, *and n_B* = 1.5, then θ*_2* = 0.5 rad = 28.647°. The third step is to find a wedge angle θ that solves the *equation: n_B = SIN(θ)*/*SIN(θ_2 -* θ). If *n_B* = 1.5 and θ*_2* = 0.5 rad, as in the previous example, then θ = 0.194235 rad = 11.129°.

Neglecting the tab 26, the bevel apparatus 20 is thinnest at its center 28, and progressively increases in thickness with increasing distance from the center 28, forming a pair of smooth bevel lenses 30, 32 that bend light from the underlying pixels 12a, 14a to meet the gap 18 as shown. Thus, light emitted from the marginal portions of the juxtaposed display devices 12 and 14 is seen by the viewer in the place where the optical gap *G* would otherwise be seen. In other words, the optical gap *G* is obscured from view, and the segmented display panel 10 appears seamless to the viewer.

The bevel angle θ of the bevel lenses 30 and 32 is either chosen empirically or a minimum bevel angle is calculated as explained above. Bevel angles up to 75° have produced acceptable results. In automotive display applications, a preferred material is clear acrylic plastic. Also, the portion of the gap 18 not occupied by the tab 26 can be filled with a joining material having optical properties that de-emphasize the appearance of the gap 18.

Referring to FIG. 3, the bevel apparatus 20' comprises one or more sheets of transparent glass or plastic with an integral bevel feature 34 aligned with respect to the gaps 18 in the manner of the bevel lenses 30, 32. A bevel apparatus 20' corresponding in dimensions to the display device 12 (or 14) may cover the face of the display 12 (or 14) as shown, or a larger bevel apparatus 20' may cover two or more juxtaposed display devices 12, 14. Alternately, the bevel apparatus 20' may be integrated into the display devices 12, 14 themselves, eliminating secondary operations to apply the bevel apparatus 20' to the display devices 12, 14. As with the embodiment of FIG. 2, the bevel features 34 symmetrically overlap juxtaposed marginal portions of the display devices 12 and 14, and the width of the bevel feature 34 is such that it overlaps at least a portion of the marginal pixels 12a and 14a. In any event, the result is the same - that is, light emitted from the marginal portions of the juxtaposed display devices 12 and 14 is seen by the viewer in the place where the optical gap *G* would otherwise be seen, and the optical gap *G* is obscured from view.

In summary, the present invention provides a simple yet effective expedient for mitigating the effects of the visual gap between juxtaposed display devices of a segmented display panel. While the invention has been described with respect to the illustrated embodiment, it is recognized that numerous modifications and variations in addition to those mentioned herein will occur to those skilled in the art. For example, the translated images do not need to begin at the edge pixels, but can begin away from the edge, with only a minor impairment of the perceived image. Also, the type of lens material, indices of refraction, and details in lens size and shape can be varied to achieve the same results. Accordingly, it is intended that the invention not be limited to the disclosed embodiment, but that it have the full scope permitted by the language of the following claims.

## Claims

1. Optical apparatus for obscuring a visual gap (G) between juxtaposed light emitting display devices (12, 14) of a segmented display panel (10), **characterized in that** it comprises:
one or more transparent optical members (20/20') in the form of a sheet or strip that at least partially overlaps exposed faces of the juxtaposed display devices (12, 14), said transparent optical members (20/20') including a bevel lens portion (30, 32/34) that overlays only peripheral portions of the display devices (12, 14) adjacent a seam (18) separating said display devices (12. 14) such that light emitted from said peripheral portions that passes through said bevel lens portion (30, 32/34) is bent away from said seam (18) at an angle with respect to light emitted from other portions of said display (12, 14), and the light emitted from said peripheral portions is seen in place of the visual gap (G).

2. The optical apparatus of claim 1, where:
said optical members are in the form of a strip (20) of transparent material symmetrically aligned with said seam (18), including first and second bevel lens portions (30, 32) oppositely disposed about said seam (18) and overlaying said peripheral portions of said display devices (12, 14).

3. The optical apparatus of any of the preceding claim, where:
said optical members (20) include an integral tab (26) of transparent material that is received in said seam (18) to ensure symmetrical alignment of said optical members with said seam (18).

4. The optical apparatus of any of the preceding claim, where:
said optical members are in the form of a sheet (20') of transparent material that individually overlay said display devices (12, 14).

5. The optical apparatus of any of the claim 1 to 3, where:
said optical members are in the form of a sheet (20') of transparent material that overlays two or more of said display devices (12, 14).
